# FASCICULE DE BREVET EUROPEEN

(11) **EP 4 072 824 B1**
(45) Date de publication et mention de la délivrance du brevet: **01.11.2023**
(21) Numéro de dépôt: 20816532.4
(22) Date de dépôt: 07.12.2020
(51) Int. Cl.: B29C 49/68, B29C 49/64, B29C 49/06, B29K 67/00, B29L 31/00, B29C 49/78

(54) **DISPOSITIF ET PROCEDE DE CONDITIONNEMENT THERMIQUE DE PREFORMES**
VORRICHTUNG UND VERFAHREN ZUR THERMISCHEN KONDITIONIERUNG VON VORFORMLINGEN
DEVICE AND METHOD FOR THE THERMAL CONDITIONING OF PREFORMS

(30) Priorité: 11.12.2019 FR 1914131
(43) Date de publication de la demande: 19.10.2022
(73) Titulaire: Sidel Participations, 76930 Octeville-sur-Mer (FR)
(72) Inventeur: PASQUIER, Hervé, 76930 Octeville-sur-Mer (FR); FEVRE, Sébastien, 76930 Octeville-sur-Mer (FR)
(74) Mandataire: Sidel Group
(86) Numéro de dépôt international: PCT/EP2020/084866
(87) Numéro de publication internationale: WO 2021/116013

(56) Documents cités:
- EP-A1- 2 392 442
- US-A1- 2010 136 160

## Description

La présente invention entre dans le domaine de la fabrication de récipients en matériau plastique, obtenus par transformation de préformes au travers d'une opération de soufflage.

Préférentiellement, mais non limitativement, le matériau plastique peut être du PET (pour « polytéréphtalate d'éthylèhe »).

Un récipient prend la forme d'une bouteille ou d'un flacon, en matériau plastique, rigide ou semi-rigide. Ce récipient est destiné à servir de conteneur, de façon non exhaustive, à un fluide, un liquide, des poudres ou des granulés, notamment de type agroalimentaire, cosmétique, dédié à l'entretien ou à l'hygiène corporelle.

De manière connue, au sein d'une ligne industrielle, les récipients peuvent recevoir plusieurs traitements successifs différents, allant de la fabrication du contenant par une opération de soufflage ou d'étirage-soufflage jusqu'au conditionnement en lots de plusieurs produits regroupés, en passant notamment par le remplissage, la fermeture par un bouchon et l'étiquetage des produits à l'unité. A l'issue de ces traitements, les produits sont dits "finis".

L'invention concerne tout particulièrement l'étape de fabrication de tels récipients.

La fabrication de récipients en matériau plastique est effectuée par formage à partir de préformes. Une préforme comprend un corps destiné à être formé surmonté d'une partie définitive, pourvue d'un col et d'une collerette. Une préforme présente globalement une forme cylindrique creuse, s'apparentant à un tube à essai.

Plus avant, le formage d'un récipient fait intervenir un fluide sous pression, en particulier de l'air, qui est soufflé à l'intérieur de la préforme, préalablement chauffée, positionnée dans un moule, en vue d'appliquer une déformation plastique jusqu'à obtenir le récipient voulu, en fonction de la forme dudit moule. Le chauffage d'une préforme doit être effectué jusqu'à obtenir une température supérieure à la température de transition vitreuse du matériau constitutif, en particulier du corps, au travers d'une opération de conditionnement thermique.

L'invention concerne spécifiquement un tel conditionnement thermique de préformes. Le conditionnement thermique s'effectue au travers d'un dispositif dédié, communément appelé « four ». Un tel four comprend généralement plusieurs modules indépendants de chauffe, aboutés les uns à la suite des autres, formant un tunnel le long duquel les préformes sont transportées pour être chauffées. Chaque module comprend donc une enceinte de transport desdites préformes et au moins un moyen de chauffage de ladite enceinte et par l'extérieur des préformes qui la traversent. Un tel moyen de chauffage peut être de tout type, notamment à rayonnement, par exemple infrarouge. Il peut comprendre, d'un côté, des lampes en vis-à-vis desquelles sont positionnés des réflecteurs, assurant ainsi une répartition du rayonnement sur tout le pourtour du corps de la préforme à chauffer. Afin d'assurer une distribution de la chaleur sur tout le tour, les préformes sont généralement mises en rotation sur elles-mêmes au cours de leur transport à l'intérieur de l'enceinte.

Plus précisément, on recherche idéalement à obtenir un gradient de température dans la paroi d'une préforme, tel que la température de la surface interne soit supérieure à la température de la surface externe. Pour ce faire, il est nécessaire de refroidir de façon contrôlée l'extérieur des préformes lors de leur trajet dans l'enceinte. Chaque module comprend donc un moyen de refroidissement de ladite enceinte, dirigé vers les préformes qui y sont transportées. Ce refroidissement s'effectue par mise en circulation de flux d'air, à température ambiante prélevé et filtré depuis l'extérieur du dispositif. De plus, le contrôle des flux s'effectue par la commande des ventilateurs dont le moyen de mise en circulation est pourvu.

Le document EP 2 392 442 décrit un exemple de dispositif de conditionnement thermique, avec notamment un contrôle des ventilateurs par l'intermédiaire de variateurs permettant de gérer la vitesse de rotation desdits ventilateurs. Ainsi, il est possible de contrôler le débit nominal de chaque ventilateur et de chaque flux d'air destiné à refroidir l'intérieur de l'enceinte lorsque les préformes y sont transportées. Dans ce contexte, une problématique réside dans le contrôle du débit nominal des flux d'air de refroidissement, qui doit être extrêmement précis. En particulier, au fil du temps et de leur fonctionnement, les ventilateurs peuvent perdre en efficacité. De même, les filtres peuvent s'encrasser. Il en résulte que le débit nominal du flux d'air produit par chaque ventilateur n'est pas respecté et on constate régulièrement des défauts des récipients, après soufflage, en sortie de l'installation. Un autre dispositif de conditionnement thermique de préformes est décrit dans le document US2010/136160A1.

L'invention a pour but de pallier les inconvénients de l'état de la technique en proposant de contrôler avec davantage de précisions le débit nominal du flux d'air, en vérifiant le débit réel au sein du canal situé entre le moyen de mise en circulation et l'enceinte. Ainsi, en cas d'un différentiel constaté par cette différence entre le débit théoriquement commandé et le débit réel mesuré, il est possible d'ajuster le contrôle des ventilateurs, afin de corriger ce différentiel éventuel.

Pour ce faire, le dispositif de conditionnement thermique de préformes, comprenant au moins un module de chauffe pourvu de :
- une enceinte définissant au moins un volume de transport desdites préformes ;
- au moins un moyen de chauffage orienté vers le volume de transport ;
- au moins un moyen de refroidissement orienté vers le volume de transport ;
- au moins un moyen de commande au moins dudit moyen de chauffage et dudit moyen de refroidissement ;

ledit moyen de refroidissement comprenant :
   - au moins un moyen de mise en circulation d'un flux d'air avec un débit nominal ;
ledit débit nominal étant déterminé par ledit moyen de commande dudit au moins un moyen de mise en circulation ;
   - au moins un canal s'étendant depuis ledit moyen de mise en circulation jusqu'à ladite enceinte et débouchant vers ledit volume de transport ;
caractérisé en ce qu'il comprend au moins :
   - le long dudit canal, au moins un moyen de mesure d'au moins une composante du débit réel dudit flux d'air ;
   - un moyen d'ajustement dudit débit nominal par rapport audit débit réel, par contrôle du moyen de commande dudit moyen de mise en circulation.

Selon des caractéristiques additionnelles, non limitatives, ledit moyen de mesure peut être un capteur de vitesse dudit flux d'air, notamment un anémomètre, tel que à tube de Pitot ou à fil chaud.

Ledit moyen de mesure peut être positionné au niveau d'un segment central de la longueur dudit canal.

Ledit moyen de refroidissement peut comprendre au moins un premier canal débouchant dans une première partie du volume de transport et un deuxième canal débouchant dans une deuxième partie de l'enceinte ; ledit moyen de mise en circulation comprenant un premier moyen de ventilation vers ledit premier canal d'un premier flux avec un premier débit nominal et un deuxième moyen de ventilation vers ledit deuxième canal d'un deuxième flux avec un deuxième débit nominal ;
et en ce que ledit moyen de mesure peut être positionné le long dudit premier canal ;
- ledit moyen d'ajustement contrôlant un premier moyen de commande dudit premier moyen de ventilation.

Ledit dispositif de conditionnement thermique peut comprendre :
- un deuxième moyen de mesure positionné le long dudit deuxième canal ;
- un deuxième moyen d'ajustement dudit deuxième débit nominal par rapport audit deuxième débit réel, par contrôle d'un moyen de commande dudit deuxième moyen de ventilation.

L'invention concerne encore un procédé de conditionnement thermique de préformes, lesdites préformes comprenant au moins un corps, dans lequel au moins :
- on transporte des préformes au sein d'un volume de transport ;
- on chauffe lesdites préformes lors de leur passage au travers dudit volume ;,
- on refroidit au moins le corps desdites préformes par ventilation d'au moins un flux d'air avec un débit nominal depuis un moyen de mise en circulation vers ladite enceinte ;
- on contrôle le débit nominal dudit flux d'air par commande dudit moyen de mise en circulation.

Un tel procédé de conditionnement thermique se caractérise en ce qu'il comprend au moins les étapes suivantes :
- on mesure au moins une composante du débit réel dudit flux d'air entre ladite enceinte et ledit moyen de mise en circulation ;
- on ajuste la commande dudit moyen de mise en circulation par rapport à ladite au moins une composante dudit débit réel mesuré.

Selon des caractéristiques additionnelles, non limitatives, on peut mesurer au moins une composante du débit réel par détection de la vitesse dudit flux d'air.

En outre, l'invention permet aussi de détecter tout dysfonctionnement du moyen de mise en circulation, comme un vieillissement des ventilateurs ou un encrassement des filtres, en vue d'émettre une alerte en vue d'opérer une maintenance adaptée. D'autres caractéristiques et avantages de l'invention ressortiront de la description détaillée qui va suivre des modes de réalisation non limitatifs de l'invention, en référence aux figures annexées, dans lesquelles :
[Fig. 1] représente schématiquement une vue simplifiée de côté d'une préforme ;
[Fig. 2] représente schématiquement une vue simplifiée selon une coupe médiane horizontale d'un four pour le conditionnement thermique de préformes, montrant notamment le transport desdites préformes à l'intérieur d'une enceinte composée de plusieurs modules de chauffe aboutés ;
[Fig. 3] représente schématiquement une vue simplifiée selon une coupe médiane d'un mode générique de réalisation d'un détail d'un dispositif de conditionnement, montrant notamment un seul canal reliant un moyen de mise en circulation d'un flux d'air vers l'enceinte dudit dispositif, avec une mesure du débit dudit flux d'air proche de la sortie dudit canal ;
[Fig. 4] représente schématiquement une similaire à la figure 3 d'un deuxième mode de réalisation, montrant notamment deux canaux distincts pourvus de leur moyen de ventilation respectif, avec une mesure du débit réel dudit flux d'air au niveau du centre d'un desdits canaux ; et
[Fig 5] représente schématiquement une similaire à la figure 3 d'un troisième mode de réalisation, montrant notamment deux canaux distincts avec leur moyen de ventilation respectif, avec une mesure du débit réel dudit flux pour chacun desdits canaux.

La présente invention concerne le conditionnement thermique de préformes 1, dans le cadre de la fabrication de récipients en matériau plastique, obtenus par transformation desdites préformes 1 au travers d'une opération d'étirage-soufflage. Préférentiellement, mais non limitativement, le matériau plastique peut être de tout type, préférentiellement du PET (pour « polytéréphtalate d'éthylèhe »).

Un récipient prend la forme d'une bouteille ou d'un flacon, en matériau plastique, rigide ou semi-rigide. Ce récipient est destiné à servir de conteneur, de façon non exhaustive, à un fluide, un liquide, des poudres ou des granulés, notamment de type agroalimentaire, cosmétique, dédié à l'entretien ou à l'hygiène corporelle.

De tels récipients peuvent recevoir plusieurs traitements successifs différents, allant de la fabrication du contenant par une opération de soufflage ou d'étirage-soufflage à partir de préformes 1, jusqu'au conditionnement en lots de plusieurs produits regroupés, en passant notamment par le remplissage, la fermeture par un bouchon et l'étiquetage des produits à l'unité. En particulier, l'opération de soufflage ou d'étirage-soufflage fait intervenir au préalable un conditionnement thermique desdites préformes 1.

Pour ce faire, l'invention a tout d'abord pour objet un dispositif 2 de conditionnement thermique de préformes 1, ci-après dénommé « dispositif 2 ».

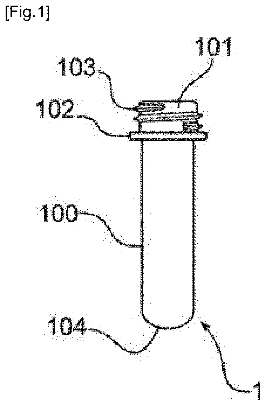

En référence à la figure 1, une préforme 1 comprend un corps 100 destiné à être formé lors du soufflage ou de l'étirage-soufflage. Ce corps 100 comprend un fond 104 fermé et est surmonté, du côté opposé audit fond 104, d'une partie définitive, pourvue d'un col 101 et d'une collerette 102. En outre, le col 101 peut comprendre un filetage 103 externe, destiné à coopérer avec un filetage interne complémentaire ménagé au sein de l'élément de bouchage du futur récipient. Une préforme 1 présente globalement une forme cylindrique creuse, s'apparentant à un tube à essai.

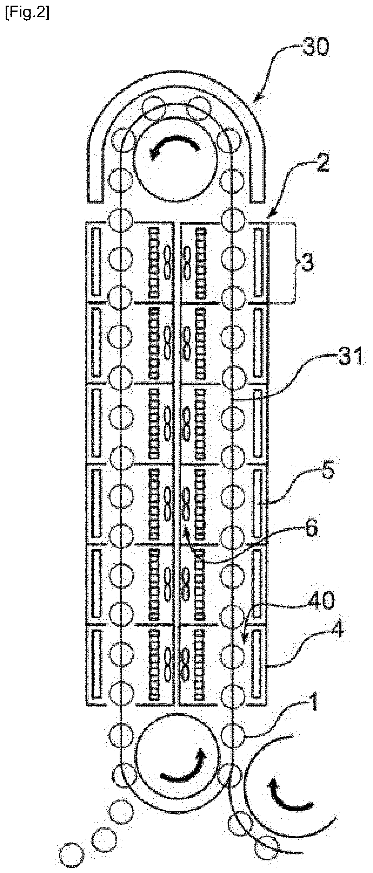

Pour des raisons de lisibilités des figures, seule la préforme 1 sera référencée dans les figures 2 à 5.

Le dispositif 2 comprend au moins un module 3 de chauffe. De préférence, comme visible sur la figure 2, le dispositif 2 comprend plusieurs modules 3 de chauffe, accolés les uns aux autres, de manière à déterminer un four 30 de type tunnel. Un tel four 30 assure le chauffage des préformes 1 qui traversent ses modules 3 par des moyens de convoyage adaptés, notamment sous forme d'une chaîne 31. Cette chaîne 31 comprend des mandrins 32, prévus rotatifs, formant des supports de réception des préformes 1, en particulier par maintien au niveau de la paroi intérieure de leur col 101. un tel mandrin 32 est souvent appelé « tournette ». Ainsi maintenue sur chaque mandrin 32, une préforme 1 tourne lors de son convoyage au sein du four 30, assurant une répartition équilibrée du chauffage sur tout le tour de chaque préforme 1. Ladite chaîne 31 parcourt le four 30 selon un cheminement, dont un exemple est visible sur la figure 2, avec notamment un chemin aller et un chemin retour traversant différents modules 3 de chauffe.

A ce titre, chaque module 3 de chauffe permet de chauffer les préformes 1 selon des caractéristiques propres et configurables.

Pour ce faire, chaque module 3 de chauffe est pourvu d'une enceinte 4 définissant au moins un volume 40 de transport desdites préformes 1.

Un tel volume 40 de transport est donc traversé par la chaîne 31, supportant des préformes 1.

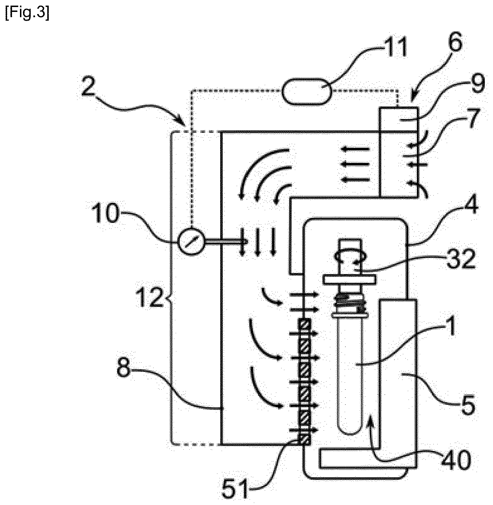

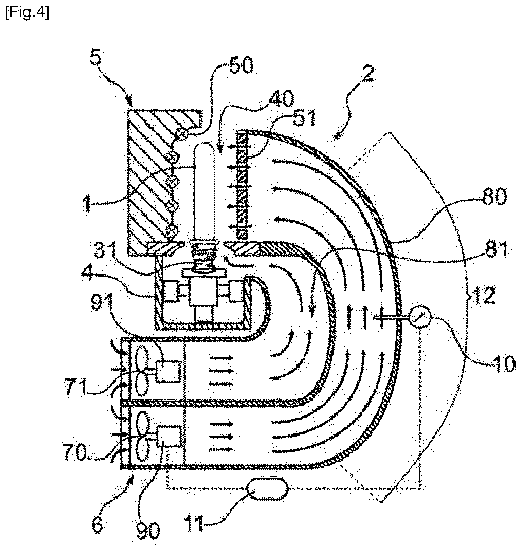

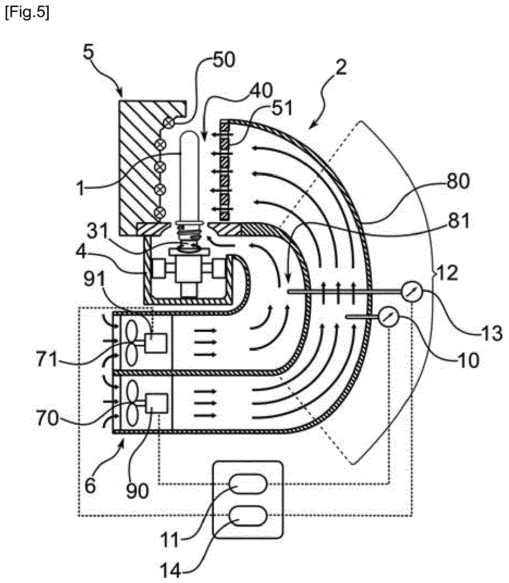

Selon une configuration possible, comme visible sur la figure 3, les préformes 1 sont transportées verticalement ou sensiblement verticalement, avec leur col 101 orienté vers le haut. Selon une autre configuration possible, comme visible sur les figures 4 et 5, les préformes 1 sont transportées verticalement ou sensiblement verticalement, avec leur col 101 orienté vers le bas.

Chaque module 3 de chauffe comprend aussi au moins un moyen 5 de chauffage orienté vers le volume 40 de transport. Le moyen 5 de chauffage permet de chauffer, par convection, l'intérieur du volume 40 et les objets qui s'y trouvent, en particulier les préformes 1 transportées, mais aussi les parois intérieures de l'enceinte 4 ainsi que la chaîne 31 et ses mandrin 32.

Le moyen 5 de chauffage peut être de tout type.

Préférentiellement, comme visible sur les figures 4 et 5, le moyen 5 de chauffage peut comprendre des organes de rayonnement thermique, comme des lampes 50, par exemple de type infrarouge. Ces lampes 50 peuvent être positionnées au niveau des parois intérieures de l'enceinte 4.

Préférentiellement, les lampes 50 peuvent se situer uniquement d'un côté de l'enceinte 4, à droite ou à gauche par rapport au sens de convoyage des préformes 1, pour les chauffer. Ces lampes 50 positionnées latéralement permettent surtout de chauffer les préformes 1 au niveau de leur corps 100.

De surcroît, en face des lampes 50, latéralement du côté opposé, les moyens 5 de chauffage peuvent comprendre des réflecteurs 51, qui peuvent renvoyer par réflexion une partie de la chaleur émise par les lampes 50.

Des lampes 50 peuvent aussi être disposées en partie inférieure ou supérieure de l'enceinte 4, en vis-à-vis du fond 104 du corps 100 des préformes 1.

Chaque module 3 de chauffe comprend encore au moins un moyen 6 de refroidissement orienté vers le volume 40 de transport. Ce refroidissement permet d'éviter une hausse de température préjudiciable sous l'effet du chauffage, surtout des préformes 1, mais aussi des différents objets susmentionnés. En outre, il faut refroidir le mandrin 32, afin d'éviter toute dilatation en prise avec une préforme 1 et susceptible de déformer le col 101, ou bien avant la prise d'une préforme 1 pour éviter que cette prise ne soit pas possible.

Pour ce faire, ledit moyen 6 de refroidissement comprend au moins un moyen 7 de mise en circulation d'un flux d'air.

On notera que l'air est préférentiellement prélevé à température ambiante, depuis l'extérieur du dispositif 2, comme visible sur les figures 3 à 5. L'air prélevé peut être filtré.

De plus, le moyen 6 de refroidissement comprend au moins un canal 8. Un tel canal 8 est généralement appelé « veine ». Ce canal 8 s'étend depuis ledit moyen 7 de mise en circulation jusqu'à ladite enceinte 4 et il débouche vers ledit volume 40 de transport.

En particulier, le canal 8 peut être relié à l'enceinte 4 au niveau des réflecteurs 51, par des ouvertures appropriées ménagées entre lesdits réflecteurs 51.

Dès lors, le flux d'air circule à l'intérieur et le long dudit canal 8, pour venir souffler de l'air frais vers l'enceinte 4 et vers les préformes 1 qui y sont transportées, surtout au niveau de leur corps 100.

La circulation du ou des flux d'air est mise en évidence par des flèches sur les figures 3 à 5.

A ce titre, ledit au moins un flux d'air est généré sous l'action dudit au moins un moyen 7 de mise en circulation. Dès lors, en fonction des valeurs de fonctionnement dudit moyen de 7 de mise en circulation, le débit du flux varie.

Au sens de l'invention, le débit correspond au « débit volumique ».

Dès lors, on détermine un débit dit « débit nominal » en fonction des valeurs de fonctionnement dudit moyen 7 de mise en circulation. Ces valeurs de fonctionnement peuvent être modifiées par un moyen 9 de commande dudit moyen 7 de mise en circulation. Ainsi, il est possible d'augmenter ou du diminuer le débit nominal, en modifiant la commande du moyen de 7 de mise en circulation.

A ce titre, selon un mode de réalisation, le moyen 7 de mise en circulation comprend au moins un ventilateur, équipé notamment d'un variateur. Le moyen 9 de commande permet alors de gérer le variateur et, ainsi, de modifier la vitesse de rotation dudit ventilateur, influant ainsi sur le débit nominal du flux mis en circulation.

En résumé, le moyen 9 de commande du moyen 7 de mise en circulation permet de déterminer ledit débit nominal.

Toutefois, comme évoqué précédemment, un tel débit nominal est uniquement envisagé et dépend de différents composants du dispositif 2, comme par exemple l'état d'encrassement des filtres, le bon état de fonctionnement des ventilateurs, etc. Ce débit nominal est donc susceptible de fluctuer en fonction du temps.

L'invention prévoit de contrôler l'état de ce débit nominal, afin de compenser une éventuelle fluctuation constatée.

Pour ce faire, le dispositif 2 comprend au moins, le long dudit au moins un canal 8, au moins un moyen 10 de mesure d'au moins une composante du débit réel dudit flux d'air. En somme, l'invention prévoit de mesurer à l'intérieur du canal 8 que le débit réel correspond bien au débit nominal du flux, généré par les moyens 7 de mise en circulation. Il est alors possible d'ajuster le fonctionnement des moyens 7 de mise en circulation, afin de compenser un différentiel mesuré ou bien d'affiner les conditions de refroidissement.

Dès lors, le dispositif 2 comprend aussi un moyen 11 d'ajustement dudit débit nominal par rapport audit débit réel, par contrôle du moyen 9 de commande dudit moyen 7 de mise en circulation. En somme, on contrôle la commande du moyen 7 de mise en circulation, par exemple l'intensité du variateur de chaque ventilateur, pour que le débit réel s'approche au plus près d'un débit requis théoriquement pour un refroidissement optimal, par rapport au chauffage des préformes, selon les caractéristiques liées au process de fabrication. En somme, avec la connaissance du débit réel du flux, il est possible d'ajuster la consigne pour rester dans les prérequis de la fabrication des récipients.

On notera que chaque module 3 de chauffe comprend au moins un moyen 9 de commande au moins dudit moyen 5 de chauffage et dudit moyen 6 de refroidissement. Ledit moyen 9 de commande permet gérer le fonctionnement des moyens 7 de mise en circulation du moyen 6 de refroidissement.

En outre, ce moyen 9 de commande peut être de tout type, sous forme de composant électronique tel un interrupteur ou bien un variateur connecté électriquement à un ventilateur. Le moyen 9 de commande peut aussi être un logiciel, exécuté sur un terminal informatique, embarqué au sein du dispositif 2 ou bien déporté, notamment au niveau d'une unité centrale.

Plus avant, le moyen 10 de mesure peut être positionné sur toute la longueur du canal 8. Le moyen 10 de mesure permet de détecter à l'intérieur du canal 8 des caractéristiques liées au flux d'air, comme son débit réel.

Selon un mode de réalisation préférentiel, ledit moyen 10 de mesure est positionné au niveau d'un segment 12 central de la longueur dudit canal 8. Un tel segment 12 au sein duquel peut être positionné le moyen 10 de mesure, se trouve donc éloigné, d'une part, du moyen 7 de mise en circulation et, d'autre part, de la sortie du canal 8 débouchant dans l'enceinte 4, notamment aux niveaux des réflecteur 51. Ce positionnement particulier permet, notamment, d'éviter que la mesure effectuée du débit réel soit parasitée, par exemple par des turbulences auprès des ventilateurs ou le chauffage de l'enceinte 4. En positionnant le moyen 10 de mesure le long du segment 12 du canal 8, on peut alors obtenir une mesure du flux de façon régulière ou approximativement régulière, ou bien sensiblement constante dans le temps. En somme, le moyen 10 de mesure est positionné à un emplacement choisi du canal 8, où le flux est stabilisé et le plus homogène possible. Cet emplacement dépend donc de la configuration propre audit canal 8.

Comme évoqué précédemment, la mesure du débit réel vise essentiellement au moins une des composantes du flux d'air circulant dans le canal 8. C'est à partir de cette composante qu'on obtient directement ou par l'intermédiaire d'un calcul, le débit réel dudit flux.

Selon un mode de réalisation, ledit moyen 10 de mesure est un capteur de vitesse dudit flux d'air. Ladite composante mesurée est alors la vitesse.

Un tel capteur peut alors être un anémomètre. Un tel anémomètre peut comprendre un organe rotatif, comme un anémomètre à hélice, à coupelles dit «de Robinson», ou à moulinet dit «de Byram». Ledit anémomètre peut aussi être de type à ultrason ou de type laser.

Préférentiellement, l'anémomètre peut être à fil chaud.

Selon un autre mode de réalisation, ledit moyen 10 de mesure est un capteur de pression dudit flux d'air, s'apparentant alors à un manomètre. Ladite composante mesurée du flux est alors la pression.

Un tel capteur est alors un anémomètre à plaque, à boulet, ou à tube dit « de Dines ». Préférentiellement, l'anémomètre est de type à tube dit « Pitot » ou « sonde Pitot ». D'autres moyen 10 de mesure peuvent être ajoutés et envisagés, notamment en vue d'obtenir d'autres informations réelles liées au flux, comme par exemple sa densité ou sa température.

Selon un deuxième mode de réalisation, représenté sur la figure 4, ledit moyen 6 de refroidissement comprend au moins un premier canal 80 débouchant dans une première partie du volume 40 et un deuxième canal 81 débouchant dans une deuxième partie de l'enceinte 4. En particulier, la sortie du premier canal 80 peut se situer en vis-à-vis du corps 100 des préformes 1 transportées dans le volume 40 de l'enceinte 4, tandis que la sortie du deuxième canal 81 se situe en face du mandrin 32 et du col 101 des préformes 1 transportées (ou inversement). Le premier canal 80 et le deuxième canal 81 sont donc séparés et chacun est dédié à un refroidissement ciblé de l'enceinte 4, en particulier la partie haute ou la partie basse du volume 40 de transport.

De plus, ledit moyen 7 de mise en circulation comprend alors un premier moyen 70 de ventilation vers ledit premier canal 80 d'un premier flux avec un premier débit nominal, ainsi qu'un deuxième moyen 71 de ventilation vers ledit deuxième canal 81 d'un deuxième flux avec un deuxième débit nominal.

Dans cette configuration, l'invention prévoit de ne contrôler le débit du flux que d'un seul des canaux.

Pour ce faire, ledit moyen 10 de mesure est positionné le long dudit premier canal 80. De plus, ledit moyen 11 d'ajustement contrôle un premier moyen 90 de commande dudit premier moyen 70 de ventilation.

Ainsi, préférentiellement, ce mode de réalisation prévoit d'implanter un capteur dans le premier canal 80 débouchant au niveau du corps 100 des préformes 1 et de contrôler la commande du premier moyen 70 de ventilation, afin de modifier et compenser tout différentiel ainsi constaté.

Selon un troisième mode de réalisation, représenté sur la figure 5, avec un premier canal 80 et un deuxième canal 81, le dispositif 2 comprend un deuxième moyen 13 de mesure positionné le long dudit deuxième canal 81. Il est alors possible de mesurer au moins une composante du deuxième flux mis en circulation dans ce deuxième canal 81, notamment visant le col 101 des préformes 1 et de le contrôler.

Dès lors, le dispositif 2 comprend un deuxième moyen 14 d'ajustement dudit deuxième débit nominal par rapport audit deuxième débit réel, par contrôle d'un deuxième moyen 91 de commande dudit deuxième moyen 71 de mise en circulation. Ainsi, ce mode de réalisation permet de contrôler indépendamment les flux mis en circulation le long de l'un ou de l'autre du premier canal 80 ou du deuxième canal 81. L'invention concerne aussi un procédé de conditionnement thermique de préformes 1, ci-après dénommé « procédé ».

Un tel procédé est particulièrement adapté à la mise en oeuvre du dispositif 2, tel que précédemment décrit.

Comme évoqué précédemment, lesdites préformes 1 comprennent au moins un corps 100.

De façon générale, on transporte les préformes 1 au sein d'un volume 40 de transport, notamment à l'intérieur de l'enceinte 4 des modules 3 de chauffe. Dès lors, on chauffe lesdites préformes 1 lors de leur passage au travers dudit volume 40.

En même temps, on refroidit au moins le corps 100 desdites préformes 1 par ventilation d'au moins un flux d'air avec un débit nominal depuis un moyen 7 de mise en circulation vers ladite enceinte 4.

En outre, on contrôle le débit nominal dudit flux d'air par commande dudit moyen 7 de mise en circulation. En particulier, on détermine le débit nominal en définissant une valeur de fonctionnement appliquée au moyen 7 de mise en circulation. Avantageusement, on mesure au moins une composante du débit réel dudit flux d'air entre ladite enceinte 4 et ledit moyen 7 de mise en circulation.

Dès lors, à partir de la connaissance du débit réel, on ajuste la commande dudit moyen 7 de mise en circulation par rapport à ladite au moins une composante dudit débit réel mesuré.

Comme évoqué précédemment, on peut mesurer la vitesse ou la pression du flux d'air.

Préférentiellement, on mesure au moins une composante du débit réel par détection de la vitesse dudit flux d'air.

Il est alors possible d'ajuster la commande du moyen 7 de mise en circulation avec un contrôle opéré directement ou bien après une conversion adaptée des valeurs mesurées, en particulier une conversion depuis des valeurs analogiques provenant des capteurs vers des valeurs numériques qu'il est alors de possible de traiter, transmettre et enregistrer via des moyens informatiques adaptés.

Le contrôle permet ainsi d'interpréter et d'envoyer des signaux de commande vers le moyen 7 de mise en circulation, pour en ajuster en temps réel le fonctionnement, au plus près des contraintes théoriques requises par le process de fabrication.

Ainsi, le conditionnement thermique de préformes 1 selon l'invention, en mesurant la réalité du flux de refroidissement mise en circulation, permet de compenser d'éventuelles variations et d'identifier un dysfonctionnement éventuel d'un composant, comme un encrassement des filtres ou un vieillissement des ventilateurs.

L'invention permet de vérifier les performances de la ventilation liée au refroidissement, mais aussi d'identifier des sources de variations ou de perturbation, qui engendrent une perte de charges entre l'amont et l'aval du canal 8.

Il est alors possible d'émettre une notification pour alerter un opérateur ou bien de planifier une maintenance spécifique et adaptée, en fonction du dysfonctionnement ainsi constaté. L'invention offre ainsi un caractère prédictif et une anticipation dans la résolution des problèmes, en les identifiant et les localisant directement au sein du dispositif 2 de conditionnement thermique.

De façon connexe, l'invention permet d'économiser de l'énergie, en particulier en optimisant la ventilation au plus proche du cahier des charges du procédé de formage du récipient.

## Revendications

1. Dispositif (2) de conditionnement thermique de préformes (1), comprenant au moins un module (3) de chauffe pourvu de :
- une enceinte (4) définissant au moins un volume (40) de transport desdites préformes (1) ;
- au moins un moyen (5) de chauffage orienté vers le volume (40) de transport ;
- au moins un moyen (6) de refroidissement orienté vers le volume (40) de transport ;
- au moins un moyen (9) de commande au moins dudit moyen (5) de chauffage et dudit moyen (6) de refroidissement ;
ledit moyen (6) de refroidissement comprenant :
- au moins un moyen (7) de mise en circulation d'un flux d'air avec un débit nominal ; ledit débit nominal étant déterminé par ledit moyen (9) de commande dudit au moins un moyen (7) de mise en circulation ;
- au moins un canal (8) s'étendant depuis ledit moyen (7) de mise en circulation jusqu'à ladite enceinte (4) et débouchant vers ledit volume (40) de transport ; caractérisé en qu'il comprend au moins :
- le long dudit canal (8), au moins un moyen (10) de mesure d'au moins une composante du débit réel dudit flux d'air ;
- un moyen (11) d'ajustement dudit débit nominal par rapport audit débit réel, par contrôle du moyen (9) de commande dudit moyen (7) de mise en circulation ;

2. Dispositif (2) de conditionnement thermique selon la revendication précédente, **caractérisé en ce que**
- ledit moyen (10) de mesure est un capteur de vitesse dudit flux d'air, notamment un anémomètre, tel que à tube de Pitot ou à fil chaud.

3. Dispositif (2) de conditionnement thermique selon l'une quelconque des revendications précédentes, **caractérisé en ce que**
- ledit moyen (10) de mesure est positionné au niveau d'un segment (12) central de la longueur dudit canal (8).

4. Dispositif (2) de conditionnement thermique selon l'une quelconque des revendications précédentes, caractérisé en ce
ledit moyen (6) de refroidissement comprend au moins un premier canal (80) débouchant dans une première partie du volume (40) de transport et un deuxième canal (81) débouchant dans une deuxième partie de l'enceinte (4);
- ledit moyen (7) de mise en circulation comprenant un premier moyen (70) de ventilation vers ledit premier canal (80) d'un premier flux avec un premier débit nominal et un deuxième moyen (71) de ventilation vers ledit deuxième canal (81) d'un deuxième flux avec un deuxième débit nominal;
et en ce que
- ledit moyen (10) de mesure est positionné le long dudit premier canal (80) ;
- ledit moyen (11) d'ajustement contrôlant un premier moyen (90) de commande dudit premier moyen (70) de ventilation.

5. Dispositif (2) de conditionnement thermique selon la revendication précédente, **caractérisé en ce qu'**il comprend
- un deuxième moyen (13) de mesure positionne le long dudit deuxième canal (81) ;
- un deuxième moyen (14) d'ajustement dudit deuxième débit nominal par rapport audit deuxième débit réel, par contrôle d'un moyen (91) de commande dudit deuxième moyen (71) de ventilation.

6. Procédé de conditionnement thermique de préformes (1), lesdites préformes (1) comprenant au moins un corps (100), dans lequel au moins :
- on transporte des préformes (1) au sein d'un volume (40) de transport ;
- on chauffe lesdites préformes (1) lors de leur passage au travers dudit volume (40) transport;
- on refroidit au moins le corps (100) desdites préformes (1) par ventilation d'au moins un flux d'air avec un débit nominal depuis un moyen (7) de mise en circulation vers ladite enceinte (4) ;
- on contrôle le débit nominal dudit flux d'air par commande dudit moyen (7) de mise en circulation ;
**caractérisé en ce qu'**il comprend au moins les étapes suivantes :
- on mesure au moins une composante du débit réel dudit flux d'air entre ladite enceinte (4) et ledit moyen (7) de mise en circulation ;
- on ajuste la commande dudit moyen (7) de mise en circulation par rapport à ladite au moins une composante dudit débit réel mesuré.

7. Procédé de conditionnement thermique selon la revendication précédente, **caractérisé en ce que**
- on mesure au moins une composante du débit réel par détection de la vitesse dudit flux d'air.

## Patentansprüche

1. Vorrichtung (2) zur thermischen Konditionierung von Vorformlingen (1), die mindestens ein Heizmodul (3) beinhaltet, das über Folgendes verfügt:
- eine Kammer (4), die mindestens ein Transportvolumen (40) für die Vorformlinge (1) definiert;
- mindestens ein Heizmittel (5), das zu dem Transportvolumen (40) gerichtet ist;
- mindestens ein Kühlmittel (6), das zu dem Transportvolumen (40) gerichtet ist;
- mindestens ein Mittel (9) zur Steuerung mindestens des Heizmittels (5) und des Kühlmittels (6);
wobei das Kühlmittel (6) Folgendes beinhaltet:
- mindestens ein Mittel (7) zur Zirkulation eines Luftstroms mit einem Nenndurchsatz; wobei der Nenndurchsatz durch das Mittel (9) zur Steuerung des mindestens einen Zirkulationsmittels (7) bestimmt wird;
- mindestens einen Kanal (8), der sich von dem Zirkulationsmittel (7) bis zu der Kammer (4) erstreckt und zu dem Transportvolumen (40) führt;
**dadurch gekennzeichnet, dass** er mindestens Folgendes beinhaltet:
- entlang des Kanals (8), mindestens ein Mittel (10) zum Messen mindestens einer Größe des tatsächlichen Durchsatzes des Luftstroms;
- ein Mittel (11) zum Einstellen des Nenndurchsatzes im Verhältnis zu dem tatsächlichen Durchsatz durch Kontrolle des Mittels (9) zur Steuerung des Zirkulationsmittels (7) .

2. Vorrichtung (2) zur thermischen Konditionierung nach dem vorhergehenden Anspruch, **dadurch gekennzeichnet, dass**
- das Messmittel (10) ein Sensor für die Geschwindigkeit des Luftstroms ist, insbesondere ein Anemometer, wie etwa ein Pitotrohr- oder ein Hitzdraht-Anemometer.

3. Vorrichtung (2) zur thermischen Konditionierung nach einem beliebigen der vorhergehenden Ansprüche, **dadurch gekennzeichnet, dass**
- das Messmittel (10) im Bereich eines mittigen Segments (12) der Länge des Kanals (8) positioniert ist.

4. Vorrichtung (2) zur thermischen Konditionierung nach einem beliebigen der vorhergehenden Ansprüche, **dadurch gekennzeichnet, dass**
- das Kühlmittel (6) mindestens einen ersten Kanal (80), der zu einem ersten Teil des Transportvolumens (40) führt, und einen zweiten Kanal (81), der zu einem zweiten Teil der Kammer (4) führt, beinhaltet;
- das Zirkulationsmittel (7) ein erstes Belüftungsmittel (70) für einen ersten Strom mit einem ersten Nenndurchsatz hin zu dem ersten Kanal (80) und ein zweites Belüftungsmittel (71) für einen zweiten Strom mit einem zweiten Nenndurchsatz hin zu dem zweiten Kanal (81) beinhaltet;
und dass
- das Messmittel (10) entlang des ersten Kanals (80) positioniert ist;
- wobei das Einstellmittel (11) ein erstes Mittel (90) zur Steuerung des ersten Belüftungsmittels (70) kontrolliert.

5. Vorrichtung (2) zur thermischen Konditionierung nach dem vorhergehenden Anspruch, **dadurch gekennzeichnet, dass** es Folgendes beinhaltet:
- ein zweites Messmittel (13), das entlang des zweiten Kanals (81) positioniert ist;
- ein zweites Mittel (14) zum Einstellen des zweiten Nenndurchsatzes im Verhältnis zu dem zweiten tatsächlichen Durchsatz durch Kontrolle eines Mittels (91) zur Steuerung des zweiten Belüftungsmittels (71).

6. Verfahren zur thermischen Konditionierung von Vorformlingen (1), wobei die Vorformlinge (1) mindestens einen Körper (100) beinhalten, wobei mindestens:
- Vorformlinge (1) innerhalb eines Transportvolumens (40) transportiert werden;
- die Vorformlinge (1) während ihres Durchgangs durch das Transportvolumen (40) erhitzt werden;
- mindestens der Körper (100) der Vorformlinge (1) durch Belüftung mit mindestens einem Luftstrom mit einem Nenndurchsatz von einem Zirkulationsmittel (7) zu der Kammer (4) hin gekühlt wird;
- der Nenndurchsatz des Luftstroms durch Steuerung des Zirkulationsmittels (7) kontrolliert wird;
**dadurch gekennzeichnet, dass** es mindestens die folgenden Schritte beinhaltet:
- Messen mindestens einer Größe des tatsächlichen Durchsatzes des Luftstroms zwischen der Kammer (4) und dem Zirkulationsmittel (7);
- Einstellen der Steuerung des Zirkulationsmittels (7) im Verhältnis zu der mindestens einen Größe des gemessenen tatsächlichen Durchsatzes.

7. Verfahren zur thermischen Konditionierung nach dem vorhergehenden Anspruch, **dadurch gekennzeichnet, dass**
- mindestens eine Größe des tatsächlichen Durchsatzes durch Detektion der Geschwindigkeit des Luftstroms gemessen wird.

## Claims

1. Thermal conditioning device (2) for thermally conditioning preforms (1), comprising
at least one heating module (3) provided with:
- an enclosure (4) defining at least one transport volume (40) for said preforms (1);
- at least one heating means (5) oriented toward the transport volume (40);
- at least one cooling means (6) oriented toward the transport volume (40);
- at least one control means (9) for controlling at least said heating means (5) and said cooling means (6);
said cooling means (6) comprising:
- at least one circulating means (7) for circulating a flow of air with a nominal flow rate;
said nominal flow rate being determined by said control means (9) of said at least one circulating means (7);
- at least one channel (8) extending from said circulating means (7) as far as said enclosure (4) and leading toward said transport volume (40);
**characterized in that** it comprises at least:
- along said channel (8), at least one measuring means (10) for measuring at least one component of the actual flow rate of said air flow;
- an adjusting means (11) for adjusting said nominal flow rate with respect to said actual flow rate, by controlling the control means (9) of said circulating means (7).

2. Thermal conditioning device (2) according to the preceding claim, **characterized in that**
- said measuring means (10) is a speed sensor for said air flow, in particular an anemometer, such as a Pitot tube anemometer or hot-wire anemometer.

3. Thermal conditioning device (2) according to either one of the preceding claims, **characterized in that**
- said measuring means (10) is positioned in a central segment (12) of the length of said channel (8).

4. Thermal conditioning device (2) according to any one of the preceding claims, **characterized in that**
- said cooling means (6) comprises at least a first channel (80) leading into a first part of the transport volume (40) and a second channel (81) leading into a second part of the enclosure (4);
- said circulating means (7) comprising a first ventilation means (70) for ventilating a first flow with a first nominal flow rate toward said first channel (80) and a second ventilation means (71) for ventilating a second flow with a second nominal flow rate toward said second channel (81);
and **in that**
- said measuring means (10) is positioned along said first channel (80);
- said adjusting means (11) controlling a first control means (90) of said first ventilation means (70).

5. Thermal conditioning device (2) according to the preceding claim, **characterized in that** it comprises
- a second measuring means (13) positioned along said second channel (81);
- a second adjusting means (14) for adjusting said second nominal flow rate with respect to said second actual flow rate, by controlling a control means (91) of said second ventilation means (71).

6. Thermal conditioning method for thermally conditioning preforms (1), said preforms (1) comprising at least a body (100), in which method at least:
- preforms (1) are transported within a transport volume (40);
- said preforms (1) are heated during their passage through said transport volume (40);
- at least the body (100) of said preforms (1) is cooled by ventilation of at least one air flow with a nominal flow rate from a circulating means (7) toward said enclosure (4);
- the nominal flow rate of said air flow is controlled by controlling said circulating means (7);
**characterized in that** it comprises at least the following steps:
- at least one component of the actual flow rate of said air flow is measured between said enclosure (4) and said circulating means (7);
- the control of said circulating means (7) is adjusted with respect to said at least one component of said actual flow rate measured.

7. Thermal conditioning method according to the preceding claim,
**characterized in that**
- at least one component of said actual flow rate is measured by detecting the speed of said air flow.
